# FASCICULE DE BREVET EUROPEEN

(11) **EP 2 271 221 B1**
(45) Date de publication et mention de la délivrance du brevet: **19.10.2011**
(21) Numéro de dépôt: 09738355.8
(22) Date de dépôt: 21.04.2009
(51) Int. Cl.: A23C 3/03, A23L 1/22, A23L 3/10, A61L 2/20

(54) **DISPOSITIF DE DEBACTERISATION THERMIQUE EN CONTINU DE PRODUITS SOUS FORME DE SOLIDES DIVISES**
VORRICHTUNG FÜR KONTINUIERLICHE THERMISCHE PASTEURISIERUNG VON PRODUKTEN IN FORM VON GETEILTEN FESTSTOFFEN
DEVICE FOR CONTINUOUS THERMAL PASTEURISATION OF PRODUCTS IN THE FORM OF DIVIDED SOLIDS

(30) Priorité: 23.04.2008 FR 0802261
(43) Date de publication de la demande: 12.01.2011
(73) Titulaire: E.T.I.A.-Evaluation Technologique, Ingenierie et Applications, 60201 Compiegne (FR)
(72) Inventeur: LEPEZ, Olivier, F-60260 Lamorlaye (FR); SAJET, Philippe, F-60610 Lacroix Saint-Ouen (FR)
(74) Mandataire: Lavialle, Bruno François Stéphane
(86) Numéro de dépôt international: PCT/FR2009/000472
(87) Numéro de publication internationale: WO 2009/133321

(56) Documents cités:
- FR-A- 2 788 336
- GB-A- 189 707 664
- US-A- 2 685 520
- US-A- 3 427 954

## Description

La présente invention concerne le traitement thermique de produits sous forme de solides divisés, et plus particulièrement la débactérisation thermique en continu de tels produits.

### ARRIERE-PLAN TECHNOLOGIQUE

Les dispositifs existants de débactérisation en continu obéissent à différents principes de fonctionnement qui sont rappelés ci-après.

On connaît des dispositifs comportant une enceinte de traitement dans laquelle est disposé un convoyeur à vis à double enveloppe, une injection de vapeur dans l'enceinte étant en outre prévue. La vis à double enveloppe dans laquelle passe un fluide caloporteur est donc une vis chauffante, mais le traitement thermique subi par les produits est en réalité principalement dû à la condensation de la vapeur. Le produit s'humidifie de ce fait d'environ 6 à 8% durant le traitement, de sorte qu'il est nécessaire de lui faire subir un traitement de séchage pour qu'il retrouve son humidité de départ après débactérisation, ce qui est un gage de stabilité bactériologique.

On a également utilisé des convoyeurs du type à lit vibro-fluidisé ou système de tube gravitaire sous pression dans lequel circule le produit, et on injecte une vapeur à une pression comprise entre 1,05 bar et 3 bars, voire plus, de manière à chauffer plus rapidement et plus fortement le produit. Cependant le produit va là encore s'humidifier, ce qui nécessite un post-traitement de séchage après la débactérisation. Ensuite et surtout, le système est sous pression, ce qui nécessite des moyens de fabrication spécifiques ainsi que des dispositifs de vannes ou sas adaptés permettant le passage du produit d'une zone à la pression atmosphérique à une zone sous pression. On pourra à ce titre se référer au document FR-A-2 788 336, dans lequel on mentionne une technique de ce type, avec une pression de fonctionnement de l'ordre de 10 bars, ce qui est très élevé, et implique des mesures particulières pour préserver l'étanchéité du système, sans parler du coût des vannes-écluses spécialement adaptées pour fonctionner sous haute pression. La température des parois de contact est alors très élevée, ce qui induit aussi des risques de brunissage ou de caramélisation des produits. Une telle technique est donc très limitative.

On a également utilisé des convoyeurs du type tube vibré à passage de courant, où le produit circule par vibration dans un tube chauffé par effet Joule. On pourra par exemple se référer au document WO-A-99/65332. Avec de tels convoyeurs du type tube vibré à passage de courant, l'échange est principalement conductif, et il s'ensuit donc des gradients de température qui peuvent devenir très importants entre le tube et le produit à chauffer, d'où des phénomènes possibles de collage par brûlage du produit contre la paroi interne du tube lorsque la température de consigne est supérieure à une température de dégradation du produit.

On a également utilisé des transporteurs purement pneumatiques, où le produit est véhiculé dans l'enceinte de traitement par un courant d'air très chaud, par exemple de l'air à 700°C, qui cède une partie de ses calories au produit. De tels systèmes conviennent en général assez mal pour des applications industrielles, car il est difficile de maîtriser les temps de séjour des particules dans l'enceinte de traitement, et la garantie d'un traitement parfaitement homogène reste très aléatoire.

Plus récemment, on a proposé des systèmes de convoyage par vis à passage direct de courant. Dans de tels systèmes, le produit est convoyé et chauffé en même temps par son contact direct avec une vis de convoyage qui est elle-même chauffée par effet Joule, comme cela est par exemple décrit dans le document WO-A-99/39549 de la demanderesse. A titre indicatif, on a couramment mis en oeuvre des traitements avec une vis dont les spires sont portées à une température de 180°C, l'espace interne à l'enceinte et surplombant le produit, encore appelé « ciel », étant à une température de 60°C, et le produit étant quant à lui a une température d'environ 100°C. Cependant, étant dans un traitement à sec (sans vapeur), il en résulte pour le produit une perte d'humidité par évaporation partielle, et par suite une dessiccation plus ou moins prononcée dudit produit.

On a alors proposé de perfectionner ce dernier dispositif en prévoyant une introduction de vapeur par injection directe dans l'enceinte, ce qui améliore à la fois les performances de montée en température des produits, et résout en même temps les problèmes précités de séchage partiel du produit lors du traitement. Cependant, dans une telle configuration, et bien que l'enceinte soit majoritairement chauffée par la chaleur émise par la vis chauffante, l'atmosphère dans l'enceinte de débactérisation n'excède en fait jamais une température de plus de 100°C. Or, une telle limite s'avère parfois pénalisante pour la débactérisation de produits extrêmement contaminés et très thermosensibles, pour lesquels il est nécessaire de mettre en oeuvre des températures de traitement plus élevées dans un temps très court. On se heurte alors à une impossibilité pratique dans la mesure où l'élévation de température de la vis chauffante risque alors d'entraîner immanquablement une détérioration du produit.

Les spécialistes savent que la débactérisation thermique en continu de produits agroalimentaires divisés nécessite de soumettre le produit à traiter à un niveau de température précis durant une période qui est elle aussi très précise. Pour un temps d'exposition donné, l'application d'une température trop basse ne permettra pas une réduction significative de la population de micro-organismes (flore totale, levures, moisissures, salmonelles, E. coli, entérobactéries, etc...). Inversement, soumettre le produit à une température trop élevée risque de dégrader les caractéristiques physiques et organoleptiques du produit (couleur, arôme, teneur en huiles essentielles ou autres molécules olfactives, etc...).

Il existe donc un besoin d'une technique de traitement thermique qui soit capable de débactériser les produits en les portant à une température au moins égale à 65°C pour en éliminer les salmonelles, et fréquemment à une température atteignant au moins une gamme de 130°C à 140°C, afin de pouvoir éliminer les formes sporulées, les mycotoxines, ou les entérobactéries qui sont pathogènes, tous ces microorganismes étant connus pour être très thermorésistants.

Il va de soi qu'un tel système ne présenterait d'intérêt que s'il peut autoriser des temps de séjour très courts, par exemple de quelques dizaines de secondes à 10 à 12 minutes. En effet, s'il est aisé de porter le produit aux températures précitées avec des temps de séjour très longs, on peut comprendre que de tels temps de séjour deviennent rédhibitoires au regard des propriétés organoleptiques des produits ou de la conservation de leurs composants comme les huiles essentielles.

A titre indicatif, avec les techniques précitées, il faudrait effectuer un traitement à une pression d'environ 20 bars pour que le produit traité soit porté à une température de 200°C, ce qui est quasiment inenvisageable dans la pratique.

On pourra également se référer, au titre de l'arrière-plan technologique du domaine de la stérilisation, aux documents US-A-3 427 954, US-A-2 685 520, et GB-A-07664.

### OBJET DE L'INVENTION

La présente invention a pour objet de concevoir un dispositif de traitement thermique en continu de produits sous forme de solides divisés, en particulier pour la débactérisation desdits produits, dont la structure permet une débactérisation satisfaisante à la fois sur le plan thermique et sur le plan des temps de séjour, tout en préservant les caractéristiques physiques et organoleptiques du produit, et aussi tout en restant compétitif en termes de coût de fabrication.

### DEFINITION GENERALE DE L'INVENTION

Le problème précité est résolu conformément à l'invention grâce à un dispositif de débactérisation thermique en continu de produits sous forme de solides divisés, comportant une enceinte fermée dans laquelle les produits sont convoyés depuis une entrée amont de l'enceinte jusqu'à une sortie aval de l'enceinte, ladite enceinte étant pourvue intérieurement de moyens commandés de parois de contact chauffantes agissant directement sur les produits lors du convoyage de ceux-ci, dispositif dans lequel l'enceinte fermée est reliée à une source d'alimentation en vapeur humide à pression atmosphérique, ladite vapeur étant surchauffée avant de pénétrer dans l'enceinte par un organe de réchauffage de fluides gazeux qui est extérieur à ladite enceinte, et dont la commande en température est liée à la commande en température des parois de contact de façon que la température de la vapeur humide surchauffée dans l'enceinte fermée à pression atmosphérique soit sensiblement égale à la température des parois de contact.

Ainsi, contrairement aux systèmes antérieurs rappelés plus haut, qui fonctionnent à pression élevée en cas d'alimentation en vapeur, on utilise ici une source d'alimentation en vapeur humide à pression atmosphérique, laquelle vapeur est préalablement surchauffée avant de pénétrer dans l'enceinte. Le fonctionnement à pression atmosphérique procure bien entendu des avantages considérables par rapport au fonctionnement sous pression, dans la mesure où il permet de simplifier la construction et de diminuer les coûts des dispositifs, notamment en évitant les problèmes d'étanchéité et les problèmes de sécurité en cas d'ouverture du dispositif pour son nettoyage.

En outre, le dispositif précité permet de créer un champ thermique équilibré entre l'apport provenant des parois de contact chauffantes et l'apport provenant de la vapeur humide surchauffée, ce qui permet d'utiliser des gammes de températures plus faibles pour les parois de contact chauffantes.

Les parois de contact chauffantes pourront être constituées par la paroi interne d'un tube vibré à passage de courant, où le produit circule par vibration dans un tube chauffé par effet Joule, ou encore par la paroi extérieure d'une vis de transfert à double enveloppe dans laquelle circule un fluide caloporteur. Ces modes de réalisation possibles restent cependant limités quant aux performances de vitesses et/ou d'apports thermiques. C'est pourquoi, dans le cadre de l'invention, un mode de réalisation préféré prévoit que les moyens de parois de contact sont constitués par des moyens de transfert chauffants, en particulier une vis hélicoïdale à surface chauffante qui est montée pour tourner autour de son axe dans l'enceinte fermée, la température de la vapeur humide surchauffée à pression atmosphérique étant alors sensiblement égale à la température de la surface chauffante de la vis hélicoïdale.

De préférence, la partie hélicoïdale de la vis chauffante de transfert est formée dans sa masse d'un matériau électriquement conducteur, et est reliée à une source d'alimentation en énergie électrique. En particulier, le dispositif comporte un premier capteur de température de la vapeur humide surchauffée à pression atmosphérique et un deuxième capteur de température de la partie hélicoïdale de la vis chauffante de transfert, lesdits premier et deuxième capteurs étant reliés à des organes respectifs de régulation, l'organe de régulation associé au premier capteur étant relié fonctionnellement à l'organe de réchauffage de fluides gazeux et l'organe de régulation associé au deuxième capteur étant relié fonctionnellement à la source d'alimentation en énergie électrique, et lesdits organes de régulation étant reliés entre eux par un comparateur de températures. Avantageusement alors, la vis chauffante de transfert est entraînée en rotation par un moteur équipé d'un variateur de fréquence dont la commande permet d'ajuster le temps de séjour des produits dans l'enceinte de traitement.

On pourra prévoir également que la partie hélicoïdale de la vis chauffante de transfert est équipée de palettes agencées pour assurer un brassage permanent des produits convoyés au cours de leur traitement.

Avantageusement encore, l'enceinte fermée est équipée d'au moins une rampe d'injection de vapeur humide surchauffée, ladite rampe étant agencée suivant la longueur de l'enceinte, en partie haute de celle-ci, et étant reliée directement, à l'extérieur de ladite enceinte, à l'organe de réchauffage de fluides gazeux. En particulier, la rampe d'injection est équipée de buses agencées en série, qui sont éventuellement pilotées individuellement en vue d'une homogénéité optimale de la température de vapeur.

Avantageusement alors, l'enceinte fermée est équipée d'un circuit de purge pour l'extraction de vapeur en excès, ledit circuit pouvant être raccordé à un organe de traitement du type cyclone ou filtre à poussières.

De préférence encore, l'organe de réchauffage de fluides gazeux est du type à résistance électrique chauffante dont l'alimentation est régulée en fonction de la température désirée du fluide qui traverse ledit organe.

Conformément à un mode de réalisation préféré, les températures de la vapeur humide préalablement surchauffée et à pression atmosphérique, et de la partie hélicoïdale de la vis chauffante de transfert, qui sont maintenues sensiblement égales tout au long du processus de débactérisation, se situent dans une gamme allant de 100°C à 250°C.

De préférence enfin, le temps de séjour, qui est ajusté par la commande du variateur de fréquence du moteur d'entraînement en rotation de la vis chauffante de transfert, se situe dans une gamme allant de quelques secondes à quelques minutes.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :
- la figure 1 est une vue partielle en perspective, du côté du moteur d'entraînement, d'un dispositif de débactérisation conforme à l'invention, dans lequel les parois de contact chauffantes sont essentiellement constituées par la partie hélicoïdale d'une vis chauffante de transfert qui est ici formée dans sa masse d'un matériau électriquement conducteur de façon à être chauffée par effet Joule ;
- la figure 2 est une vue schématique du dispositif complet, permettant de mieux distinguer les organes de commande mécaniques et électriques associés ;
- la figure 3 est une vue en coupe transversale permettant de distinguer l'agencement d'une rampe, ici unique, d'injection de vapeur surchauffée et à pression atmosphérique ; et
- la figure 4 est une coupe axiale schématique permettant de mieux visualiser le produit traité dans l'enceinte de traitement avec la rampe d'injection de vapeur surchauffée surplombant le produit.

### DESCRIPTION DETAILLEE D'UN MODE DE REALISATION PREFERE

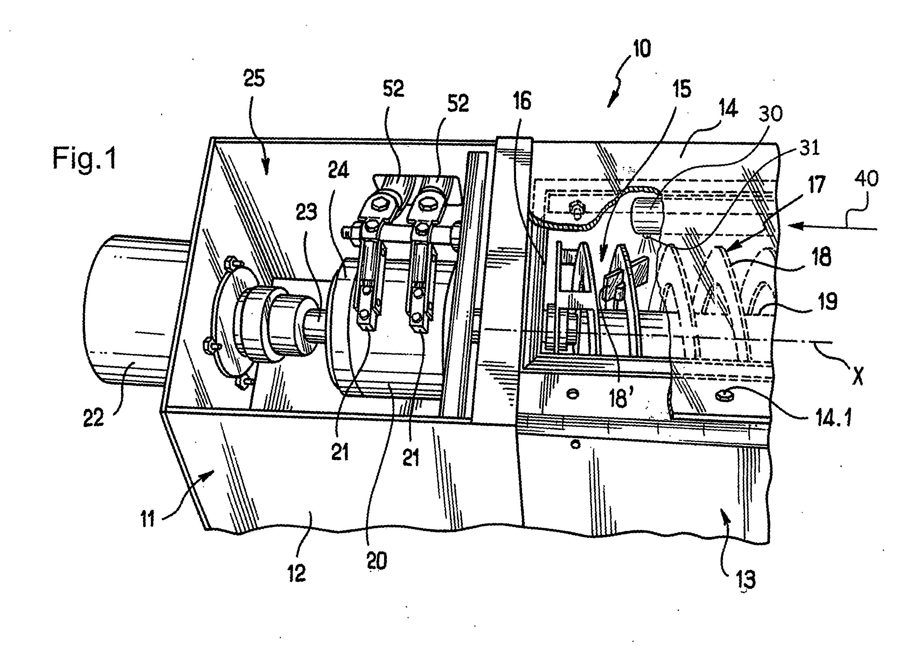

La figure 1 permet de distinguer une partie d'un dispositif de traitement 10 en vue de la débactérisation de produits sous forme de solides divisés conforme à l'invention.

On ne distingue ici qu'une extrémité du dispositif, dont la longueur pourra varier selon le cas. Le dispositif 10 comporte un bâti 11, dont une première partie formant caisson 12 délimite un espace 25 dans lequel sont logés des organes d'entraînement mécanique et d'alimentation électrique. Le bâti 11 comporte également, immédiatement juxtaposée au caisson d'extrémité 12, une enveloppe tubulaire 13 délimitant un espace intérieur noté 15. En l'espèce, l'enveloppe tubulaire 13 est constituée par une auge à fond demi-cylindrique, avec deux cloisons terminales 16 dont on ne distingue ici que la cloison amont, laquelle auge est fermée supérieurement par un capotage 14 qui est par exemple boulonné pour sa fermeture par des boulons 14.1, ledit capotage pouvant être pivotant le long de son bord arrière car, comme on le verra par la suite, le processus de débactérisation se déroule à pression atmosphérique, de sorte qu'il n'est pas nécessaire de prévoir des organes spéciaux de fermeture et d'alimentation/sortie des produits adaptés pour une étanchéité élevée sous pression, des moyens ordinaires adaptés à un niveau d'étanchéité à des pressions proches de la pression atmosphérique étant alors suffisants.

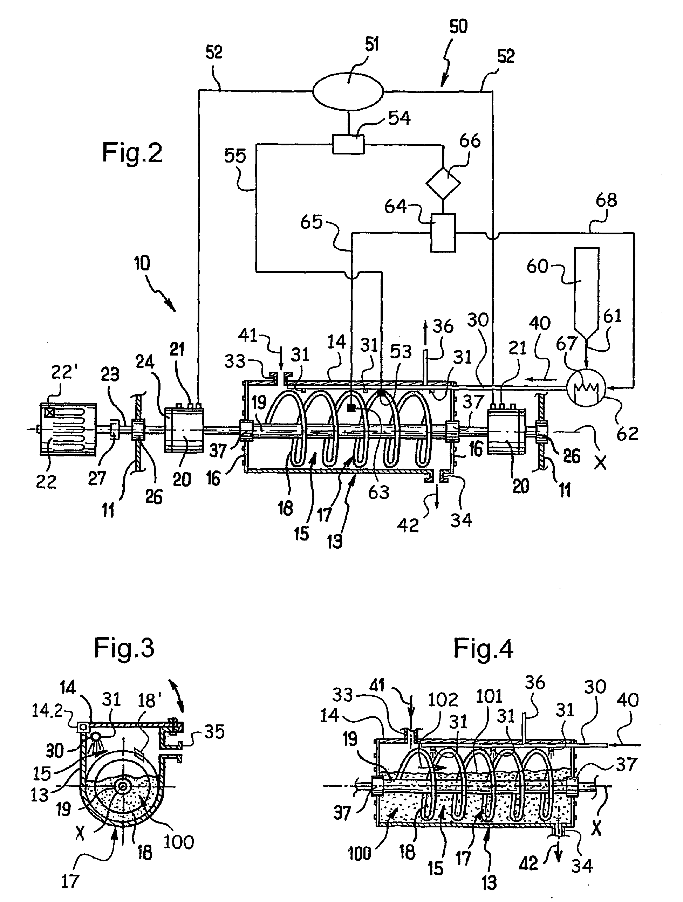

A l'intérieur de cet espace fermé 15, sont disposés des moyens commandés de parois de contact chauffantes, en l'espèce constitués par une vis hélicoïdale 17 à surface chauffante 18 qui est montée pour tourner autour de son axe X dans l'enceinte fermée 13, la partie hélicoïdale 18 de la vis chauffante de transfert 17 étant ici formée dans sa masse d'un matériau électriquement conducteur en vue d'un chauffage de ladite partie hélicoïdale par effet Joule. En l'espèce, la partie hélicoïdale 18 a une forme de bande hélicoïdale plate, qui est fixée sur un arbre central 19. Ceci ne constitue naturellement qu'un exemple, et l'on pourra utiliser un plat spiralé sans axe central, ou encore utiliser toute autre géométrie hélicoïdale. Comme cela est mieux visible sur la coupe de la figure 3, la partie hélicoïdale 18 arrive inférieurement au niveau du fond demi-cylindrique de l'auge constituant l'enveloppe tubulaire 13.

On utilise ainsi une partie hélicoïdale 18 à surface chauffante constituant aussi un moyen de transfert chauffant. Bien que l'on puisse faire appel à différentes technologies pour réaliser une telle partie hélicoïdale à surface chauffante, comme une peau chauffée par effet Joule, ou encore une vis à double enveloppe parcourue par un fluide caloporteur, on a préféré illustrer ici une vis chauffante agencée conformément à l'enseignement du document WO-A-99/39549 précité de la demanderesse, dans lequel la partie hélicoïdale 18 est formée dans sa masse d'un matériau électriquement conducteur, ladite partie hélicoïdale étant reliée à une source d'alimentation en énergie électrique pour constituer un moyen de transfert chauffant. Les performances obtenues avec cet agencement sont en effet deux à trois fois meilleures qu'avec une vis chauffante à double enveloppe ou une vis à peau chauffante.

L'arbre 19 est rigidement solidaire d'un tambour 20 en matériau électriquement conducteur, sur lequel frottent des charbons 21 d'amenée du courant électrique, reliés par des fils conducteurs 52 à une source d'alimentation en énergie électrique non représentée ici. Le tambour 20 est relié à l'arbre de sortie 23 d'un moteur électrique 22, par l'intermédiaire d'un joint d'accouplement 24 en matériau électriquement isolant. Le tambour 20 et l'ensemble d'accouplement au moteur se trouvent logés dans le compartiment 25 délimité par le caisson 12, ce qui permet d'obtenir une sécurité optimale dans la mesure où ce compartiment est isolé physiquement de la partie de traitement du dispositif.

On distingue également sur la figure 1 une palette 18' agencée sur une spire de la vis chauffante 17, une pluralité de telles palettes 18' étant ainsi prévues sur la longueur de la partie hélicoïdale 18 en vue d'assurer un brassage permanent des produits convoyés au cours de leur traitement.

Conformément à une caractéristique essentielle de l'invention, le dispositif de débactérisation thermique 10 utilise une alimentation en vapeur humide à pression atmosphérique, ladite vapeur étant préalablement surchauffée avant de pénétrer dans l'enceinte 13. Sur la figure 1, on distingue ainsi l'extrémité d'une rampe 30 d'injection d'une vapeur humide surchauffée, agencée à l'intérieur de l'enceinte chauffée 13, en étant disposée suivant la longueur de ladite enceinte, et en partie haute de celle-ci. La rampe d'injection 30 présente en l'espèce des buses 31 agencée en série, lesquelles buses pourront éventuellement être pilotées individuellement par des moyens non représentés ici, en vue d'une homogénéité optimale de la température de vapeur. Sur la figure 1, la source d'alimentation en vapeur surchauffée à pression atmosphérique est simplement symbolisée par la flèche 40. La vapeur surchauffée sera toujours humide, et sera éventuellement constituée de vapeur saturée.

Sur la figure 2, on retrouve les éléments qui viennent d'être décrits en référence à la figure 1, avec en plus, pour les éléments mécaniques, des paliers de support 26 intégrés dans la parois du bâti 11, un accouplement 27 associé à l'arbre de sortie du moteur 22, et des paliers étanches 37 agencés au niveau des cloisons terminales 16 de l'enceinte de traitement 13.

Sur la figure 2, on distingue en outre une source d'alimentation en vapeur humide à pression atmosphérique, ladite vapeur étant préalablement surchauffée avant de pénétrer dans l'enceinte 13. On a représenté ici schématiquement un réservoir de vapeur saturée 60 qui est relié par une conduite 61 à un organe de réchauffage de fluides gazeux 62 agencé à l'extérieur de l'enceinte 13. Cet organe de réchauffage de fluides gazeux 62 sert à surchauffer la vapeur avant que celle-ci ne pénètre dans l'enceinte 13. On pourra par exemple utiliser, comme on l'a illustré sur la figure 2, un organe du type à résistance électrique chauffante 67 dont l'alimentation est régulée en fonction de la température du fluide qui traverse ledit organe. La rampe d'injection 30 de vapeur humide à pression atmosphérique est branchée directement en sortie de l'organe de réchauffage de fluides gazeux 62 qui surchauffe ainsi la vapeur au niveau de température désiré.

On a également illustré sur la figure 2, de façon schématique, un ensemble de commande 50, çomportant une génératrice de courant 51 reliée par des lignes 52 aux charbons frotteurs 21. On a également représenté schématiquement un variateur de fréquence 22' équipant le moteur 22 d'entraînement en rotation de la vis chauffante de transfert 17. La commande de ce variateur de fréquence 22' permet d'ajuster avec une grande précision le temps de séjour des produits dans l'enceinte de traitement 13.

Ainsi que cela a été dit plus haut, et conformément à une caractéristique essentielle de l'invention, l'enceinte fermée 13 est reliée à une source 60, 62, 30 d'alimentation en vapeur humide à pression atmosphérique, ladite vapeur étant surchauffée avant de pénétrer dans l'enceinte 13 par l'organe de réchauffage de fluides gazeux 62 qui est extérieur à ladite enceinte, et dont la commande en température est liée à la commande en température des parois de contact, c'est-à-dire en l'espèce de la partie hélicoïdale 18 de la vis chauffante de transfert 17, de façon que la température Tᵥ de la vapeur humide surchauffée dans l'enceinte fermée 13 à pression atmosphérique soit sensiblement égale à la température Tₛ des parois de contact 18.

Ainsi, comme cela est mieux visible sur la vue de la figure 4, les produits 100 à débactériser pénètrent dans l'enceinte de travail 13 par une entrée 33, comme schématisé par la flèche 41, puis sont convoyés dans l'enceinte 13 par la vis de transfert chauffante 17, comme schématisé par la flèche 102, et sortent de ladite enceinte par une sortie 34, comme schématisé par la flèche 42. L'entrée 33 et la sortie 34 sont des organes tubulaires ordinaires, sans qu'il soit besoin d'utiliser des sas hermétiques spécialement adaptés pour fonctionner sous pression pour l'entrée et la sortie des produits, ceci en raison du fait que le processus de débactérisation se déroule à la pression atmosphérique. Les produits traités qui sortent par la sortie 34 sont directement admis dans un refroidisseur (non représenté ici) adapté pour que les produits subissent un refroidissement très rapide (flash) afin que leur température redescende très vite en-dessous d'un seuil de température (par exemple 20 à 25°C) correspondant à un niveau de développement des bactéries. Cette étape bien connue est indispensable, sans quoi les produits se refroidiraient lentement en restant trop longtemps à une température élevée.

Si l'on revient à la figure 2, on constate qu'il est prévu un premier capteur 63 de température de la vapeur humide surchauffée à pression atmosphérique, et un deuxième capteur 53 de température de la partie hélicoïdale 18 de la vis chauffante de transfert 17. Le capteur 53 de température de la partie hélicoïdale 18 de la vis chauffante de transfert 17 est relié, par une ligne 55, à un organe de régulation associé 54, lequel organe est relié fonctionnellement à la source d'alimentation en énergie électrique 51. Le capteur 63 de température de la vapeur surchauffée et à pression atmosphérique est quant à lui relié, par une ligne 65, à un organe de régulation associé 64, qui est fonctionnellement relié, par une ligne 68, à l'organe de réchauffage de fluides gazeux 62. Les capteurs de température 53 et 63 envoient aux organes de régulation associés 54, 64 un signal correspondant à la température détectée, respectivement Tₛ des spires chauffantes et Tᵥ de la vapeur surchauffée, et il est prévu, entre les organes de régulation 64 et 54 précités, un comparateur 66 permettant de surveiller en permanence l'écart entre les températures Tᵥ et Tₛ, sachant que cet écart doit rester inférieur à un seuil prédéterminé, par exemple de quelques degrés.

Les organes de régulation 54, 64 permettent ainsi de faire en sorte de la température Tᵥ de la vapeur humide surchauffée dans l'enceinte fermée 13 à pression atmosphérique reste en permanence sensiblement égale à la température Tₛ des parois de contact 18, et ceci tout au long du processus de débactérisation thermique. Ainsi, pour la première fois, on utilise des apports thermiques séparés permettant d'obtenir des niveaux de températures comparables entre les parois de contact et la vapeur humide à pression atmosphérique occupant le « ciel » des produits convoyés dans l'enceinte 13, au-dessus de la surface libre 101 desdits produits (figure 4).

Les figures 3 et 4 permettent de mieux visualiser les produits 100 en cours de traitement de débactérisation dans l'enceinte 13.

Sur la figure 3, on notera la présence d'une rampe 30, ici unique, d'injection de vapeur, avec une buse d'injection associée 31, étant entendu que l'on pourra prévoir une pluralité de telles rampes, et on distingue également un embout de sortie 35 associé à la vapeur en excès, étant entendu qu'il ne s'agit aucunement d'une fermeture étanche dans la mesure où l'intérieur de l'enceinte 13 est en permanence à la pression atmosphérique, contrairement à de nombreux traitements antérieurs qui fonctionnent à une pression élevée. On distingue également sur la figure 3 la charnière 14.2 associée au relevage et à la fermeture du couvercle 14.

On distingue enfin, sur les figures 2 et 4, un circuit de purge 36 représenté ici de façon schématique pour l'extraction de vapeur en excès, ledit circuit pouvant être raccordé à un organe de traitement, non représenté ici, de type cyclone ou filtre à poussières.

Les températures Tᵥ de la vapeur humide préalablement surchauffée et à pression atmosphérique, et Tₛ de la partie hélicoïdale de la vis chauffante de transfert 17, qui sont maintenues sensiblement égales tout au long du processus de débactérisation, se situent en général dans une gamme préférée allant de 100°C à 250°C. La vapeur surchauffée sort de l'organe de réchauffage de fluides gazeux à une pression suffisante (par exemple 2 à 3 bars) pour retomber, par suite des pertes de charge dans le circuit, au niveau désiré de la pression atmosphérique à son entrée dans l'enceinte fermée.

Le temps de séjour, qui est ajusté par la commande du variateur de fréquence 22' du moteur 22 d'entraînement en rotation de la vis chauffante de transfert 17, se situe alors quant à lui dans une gamme allant de quelques secondes à quelques minutes.

Le dispositif sera en outre avantageusement équipé de moyens de contrôle de la température du produit au cours de son traitement, en agençant des sondes (non représentées ici) mesurant la température du produit en différents points, par exemple à son entrée, à 25%, 50%, 75% de la longueur de convoyage, et à sa sortie. On prévoira aussi un contrôle de la température du ciel surplombant le produit convoyé, ainsi qu'un contrôle permanent de l'humidité dans le ciel afin que celle-ci ne tombe pas en-dessous d'un seuil prédéterminé. Toutes ces sondes seront reliées à l'unité centrale de pilotage de l'installation.

L'invention permet ainsi de disposer d'un dispositif de débactérisation en continu et à pression atmosphérique, où l'ensemble de l'enceinte du dispositif et de l'atmosphère surplombant le produit est maintenu et régulé à une seule et même température, permettant ainsi de garantir au produit un temps d'exposition à une température homogène et constante tout au long de son parcours dans l'enceinte du dispositif.

L'association pour la première fois du principe de convoyage du produit par une vis à passage de courant chauffée par effet Joule, à l'injection dans l'enceinte de traitement d'une vapeur surchauffée, à pression atmosphérique, permet d'obtenir une atmosphère de l'enceinte qui est maintenue à une température homogène et parfaitement contrôlée en jouant sur la température du surchauffeur de vapeur avant injection de la vapeur dans l'enceinte de traitement. Il est à noter que l'humidité de l'enceinte sera toujours d'environ 100%, puisque seule la vapeur est présente dans ladite enceinte. Ceci permet également de convoyer le produit dans cette enceinte surchauffée et humide à pression atmosphérique par des spires elles-mêmes chauffées à une température inférieure ou égale à celle de l'atmosphère par action sur la régulation électronique de la puissance électrique envoyée sur les spires.

L'invention procure de multiples avantages qui vont être résumés ci-après :
- le produit monte très rapidement à sa température d'équilibre donnée en fonction de la température de régulation appliquée et du temps de séjour dans le réacteur ;
- la température de traitement du produit étant principalement liée à la température de l'enceinte (surface d'échange du produit), la température des spires sera de ce fait beaucoup plus faible que celle mise en oeuvre dans les versions traditionnelles, ce qui préserve d'autant mieux les qualités organoleptiques des produits ;
- la très rapide montée en température du produit permet de diminuer le temps de séjour du produit comparativement à celui mis en jeu dans les versions traditionnelles (les essais effectués par la demanderesse tendent à montrer que l'on peut diviser les temps de séjour par 2 ou 3 par rapport aux techniques traditionnelles), ce qui a pour conséquence directe un gain de productivité sur les capacités de traitement du dispositif ;
- l'atmosphère constamment humide garantie par l'injection de la vapeur surchauffée non recondensée limite la perte en eau du produit pendant son traitement ;
- la température extrêmement chaude et homogène du réacteur évite toute condensation de la vapeur sur un produit circulant pourtant dans une enceinte à pression atmosphérique ;
- enfin, la construction des spires du convoyeur à vis à passage de courant est grandement simplifiée dans la mesure où la fonction de chauffage des spires devient maintenant secondaire, leur fonction étant maintenant d'assister et maintenir une température homogène dans l'ensemble de l'enceinte, et par suite le dimensionnement des spires n'est plus une fonction du calcul de la surface d'échange avec le produit.

On est ainsi parvenu à réaliser un dispositif de débactérisation d'un produit par voie thermique qui ouvre la voie au traitement de produits particulièrement délicats, tels que l'ail, les poudres d'épices (curry, curcuma, etc...), les produits laitiers en poudre.

Le traitement à pression atmosphérique procure enfin de multiples avantages, non seulement quant à la simplification du dispositif pour sa structure, mais aussi pour son coût de fabrication et sa maintenance.

Le dispositif qui vient d'être décrit est principalement dédié à un traitement de débactérisation, mais il va de soi qu'il pourra être utilisé pour des opérations d'étuvage ou de séchage.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Dispositif de débactérisation thermique en continu de produits sous forme de solides divisés, comportant une enceinte fermée (13) dans laquelle les produits sont convoyés depuis une entrée amont (33) de l'enceinte jusqu'à une sortie aval (34) de l'enceinte, ladite enceinte étant pourvue intérieurement de moyens commandés de parois de contact chauffantes (18) agissant directement sur les produits lors du convoyage de ceux-ci, **caractérisé en ce que** l'enceinte fermée (13) est reliée à une source (60, 62, 30) d'alimentation en vapeur humide à pression atmosphérique, ladite vapeur étant surchauffée avant de pénétrer dans l'enceinte (13) par un organe de réchauffage de fluides gazeux (62) qui est extérieur à ladite enceinte, et dont la commande en température est liée à la commande en température des parois de contact (18) de façon que la température (Tᵥ) de la vapeur humide surchauffée dans l'enceinte fermée (13) à pression atmosphérique soit sensiblement égale à la température (Tₛ) des parois de contact.

2. Dispositif selon la revendication 1, **caractérisé en ce que** les moyens de parois de contact sont constitués par des moyens de transfert chauffants, en particulier une vis hélicoïdale à surface chauffante (17) qui est montée pour tourner autour de son axe (X) dans l'enceinte fermée (13), la température (Tᵥ) de la vapeur humide surchauffée à pression atmosphérique étant alors sensiblement égale à la température (Tₛ) de la surface chauffante (18) de la vis hélicoïdale (17).

3. Dispositif selon la revendication 2, **caractérisé en ce que** la partie hélicoïdale (18) de la vis chauffante de transfert (17) est formée dans sa masse d'un matériau électriquement conducteur, et est reliée à une source d'alimentation en énergie électrique (51).

4. Dispositif selon la revendication 3, **caractérisé en ce qu'**il comporte un premier capteur (63) de température de la vapeur humide surchauffée à pression atmosphérique et un deuxième capteur (53) de température de la partie hélicoïdale (18) de la vis chauffante de transfert (17), lesdits premier et deuxième capteurs étant reliés à des organes respectifs de régulation (64, 54), l'organe de régulation (64) associé au premier capteur (63) étant relié fonctionnellement à l'organe de réchauffage de fluides gazeux (62) et l'organe de régulation (54) associé au deuxième capteur (53) étant relié fonctionnellement à la source d'alimentation en énergie électrique (51), et lesdits organes de régulation (64, 54) étant reliés entre eux par un comparateur de températures (66).

5. Dispositif selon la revendication 4, **caractérisé en ce que** la vis chauffante de transfert (17) est entraînée en rotation par un moteur (22) équipé d'un variateur de fréquence (22') dont la commande permet d'ajuster le temps de séjour des produits dans l'enceinte de traitement (13).

6. Dispositif selon la revendication 2, **caractérisé en ce que** la partie hélicoïdale (18) de la vis chauffante de transfert (17) est équipée de palettes (18') agencées pour assurer un brassage permanent des produits convoyés au cours de leur traitement.

7. Dispositif selon l'une des revendications 2 à 6, **caractérisé en ce que** l'enceinte fermée (13) est équipée d'au moins une rampe (30) d'injection de vapeur humide surchauffée, ladite rampe étant agencée suivant la longueur de l'enceinte (13), en partie haute de celle-ci, et étant reliée directement, à l'extérieur de ladite enceinte, à l'organe de réchauffage de fluides gazeux (62).

8. Dispositif selon la revendication 7, **caractérisé en ce que** la rampe d'injection (30) est équipée de buses (31) agencées en série, qui sont éventuellement pilotées individuellement en vue d'une homogénéité optimale de la température de vapeur.

9. Dispositif selon la revendication 7 ou la revendication 8, **caractérisé en ce que** l'enceinte fermée (13) est équipée d'un circuit de purge (36) pour l'extraction de vapeur en excès, ledit circuit pouvant être raccordé à un organe de traitement du type cyclone ou filtre à poussières.

10. Dispositif selon la revendication 7 ou la revendication 8, **caractérisé en ce que** l'organe de réchauffage de fluides gazeux (62) est du type à résistance électrique chauffante dont l'alimentation est régulée en fonction de la température désirée du fluide qui traverse ledit organe.

11. Dispositif selon l'une des revendications 2 à 10, **caractérisé en ce que** les températures (Tᵥ) de la vapeur humide préalablement surchauffée et à pression atmosphérique, et (Tₛ) de la partie hélicoïdale (18) de la vis chauffante de transfert (17), qui sont maintenues sensiblement égales tout au long du processus de débactérisation, se situent dans une gamme allant de 100°C à 250°C.

12. Dispositif selon les revendications 5 et 11, **caractérisé en ce que** le temps de séjour, qui est ajusté par la commande du variateur de fréquence (22') du moteur (22) d'entraînement en rotation de la vis chauffante de transfert (17), se situe dans une gamme allant de quelques secondes à quelques minutes.

## Claims

1. Device for continuous thermal debacterization of products in the form of divided solids, comprising a sealed chamber (13) in which the products are conveyed from an upstream inlet (33) of the chamber to a downstream outlet (34) of the chamber, said chamber being provided internally with controlled heating contact wall means (18) acting directly on the products as they are conveyed, **characterized in that** the sealed chamber (13) is linked to a power source (60, 62, 30) supplying wet steam at atmospheric pressure, said steam being superheated before penetrating into the chamber (13) via a gaseous-fluids reheating member (62) which is external to said chamber, and whose temperature control is linked to the temperature control of the contact walls (18) so that the temperature (Tᵥ) of the superheated wet steam in the sealed chamber (13) at atmospheric pressure is substantially equal to the temperature (Tₛ) of the contact walls.

2. Device according to Claim 1, **characterized in that** the contact wall means consist of heating transfer means, in particular a helical screw with heating surface (17) which is mounted to rotate around its axis (X) in the sealed chamber (13), the temperature (Tᵥ) of the superheated wet steam at atmospheric pressure then being substantially equal to the temperature (Tₛ) of the heating surface (18) of the helical screw (17).

3. Device according to Claim 2, **characterized in that** the helical part (18) of the transfer heating screw (17) is made as a whole from an electrically conductive material, and is linked to an electrical energy supply source (51).

4. Device according to Claim 3, **characterized in that** it comprises a first temperature sensor (63) for sensing the temperature of the superheated wet steam at atmospheric pressure and a second temperature sensor (53) for sensing the temperature of the helical part (18) of the transfer heating screw (17), said first and second sensors being linked to respective regulation members (64, 54), the regulation member (64) associated with the first sensor (63) being functionally linked to the gaseous-fluids reheating member (62) and the regulation member (54) associated with the second sensor (53) being functionally linked to the electrical energy supply source (51), and said regulation members (64, 54) being linked together by a temperature comparator (66).

5. Device according to Claim 4, **characterized in that** the transfer heating screw (17) is driven in rotation by a motor (22) equipped with a frequency regulator (22'), the control of which makes it possible to adjust the dwell time of the products in the treatment chamber (13).

6. Device according to Claim 2, **characterized in that** the helical part (18) of the transfer heating screw (17) is equipped with paddles (18') arranged to ensure a constant stirring of conveyed products during their treatment.

7. Device according to one of Claims 2 to 6, **characterized in that** the sealed chamber (13) is equipped with at least one superheated wet steam injection manifold (30), said manifold being arranged along the length of the chamber (13), in the top part thereof, and being directly linked, outside said chamber, to the gaseous-fluids reheating member (62).

8. Device according to Claim 7, **characterized in that** the injection manifold (30) is equipped with nozzles (31) arranged in series, which may be driven individually to obtain an optimum uniformity of the steam temperature.

9. Device according to Claim 7 or Claim 8, **characterized in that** the sealed chamber (13) is equipped with a bleed circuit (36) for extracting excess steam, said circuit being able to be connected to a treatment member of the cyclone or dust filter type.

10. Device according to Claim 7 or Claim 8, **characterized in that** the gaseous-fluids reheating member (62) is of the type with heating electrical resistance whose supply is regulated according to the desired temperature of the fluid passing through said member.

11. Device according to one of Claims 2 to 10, **characterized in that** the temperatures (Tᵥ) of the previously superheated wet steam at atmospheric pressure, and (Tₛ) of the helical part (18) of the transfer heating screw (17), which are kept substantially equal throughout the debacterization process, lie within a range from 100°C to 250°C.

12. Device according to Claims 5 and 11, **characterized in that** the dwell time, which is adjusted by the control of the frequency regulator (22') of the motor (22) driving the transfer heating screw (17) in rotation, lies within a range from a few seconds to a few minutes.

## Patentansprüche

1. Vorrichtung zur kontinuierlichen thermischen Entkeimung von feinteiligen Feststoffen Produkten, umfassend eine geschlossene Kammer (13), in der die Produkte von einem stromaufwärtigen Einlass (33) der Kammer bis zu einem stromabwärtigen Auslass (34) der Kammer befördert werden, wobei die genannte Kammer innen mit gesteuerten wärmeabgebenden Kontaktwandmitteln (18) versehen ist, die während des Förderns der Produkte direkt auf diese einwirken, **dadurch gekennzeichnet, dass** die geschlossene Kammer (13) an eine Quelle (60, 62, 30) zur Versorgung mit Nassdampf bei Atmosphärendruck angeschlossen ist, wobei der genannte Dampf überhitzt wird, ehe er über ein Element (62) zum Erwärmen von gasförmigen Fluiden, das sich außerhalb der genannten Kammer befindet, in die Kammer (13) eintritt, und deren Temperatursteuerung mit der Temperatursteuerung der Kontaktwände (18) verbunden ist, sodass die Temperatur (Tᵥ) des überhitzten Nassdampfes in der geschlossenen Kammer (13) bei Atmosphärendruck im Wesentlichen gleich der Temperatur (Tₛ) der Kontaktwände ist.

2. Vorrichtung nach Anspruch 1, **dadurch gekennzeichnet, dass** die Kontaktwandmittel aus wärmeabgebenden Fördermitteln gebildet sind, insbesondere einer Förderschnecke mit wärmeabgebender Oberfläche (17), die so gelagert ist, dass sie sich in der geschlossenen Kammer (13) um ihre Achse (X) drehen kann, wobei die Temperatur (Tᵥ) des überhitzten Nassdampfes bei Atmosphärendruck dann im Wesentlichen gleich der Temperatur (Tₛ) der wärmeabgebenden Oberfläche (18) der Förderschnecke (17) ist.

3. Vorrichtung nach Anspruch 2, **dadurch gekennzeichnet, dass** der Schneckenabschnitt (18) der wärmeabgebenden Förderschnecke (17) in seiner Masse aus einem elektrisch leitenden Material gebildet und mit einer Stromversorgungsquelle (51) verbunden ist.

4. Vorrichtung nach Anspruch 3, **dadurch gekennzeichnet, dass** sie einen ersten Temperatursensor (63) zum Messen der Temperatur des überhitzten Nassdampfes bei Atmosphärendruck und einen zweiten Temperatursensor (53) zum Messen der Temperatur des Schneckenabschnittes (18) der wärmeabgebenden Förderschnecke (17) umfasst, wobei der genannte erste und der genannte zweite Sensor mit entsprechenden Regelelementen (64, 54) verbunden sind, wobei das mit dem ersten Sensor (63) verbundene Regelelement (64) funktionell mit dem Element (62) zum Erwärmen von gasförmigen Fluiden verbunden ist und das mit dem zweiten Sensor (53) verbundene Regelelement (54) funktionell mit der Stromversorgungsquelle (51) verbunden ist, und wobei die genannten Regelelemente (64, 54) miteinander über einen Temperaturkomparator (66) verbunden sind.

5. Vorrichtung nach Anspruch 4, **dadurch gekennzeichnet, dass** die wärmeabgebende Förderschnecke (17) von einem mit einem Frequenzregler (22') ausgerüsteten Motor (22) in Drehrichtung angetrieben wird, wobei die Steuerung des Frequenzreglers das Einstellen der Verweilzeit der Produkte in der Behandlungskammer (13) ermöglicht.

6. Vorrichtung nach Anspruch 2, **dadurch gekennzeichnet, dass** der Schneckenabschnitt (18) der wärmeabgebenden Förderschnecke (17) mit Schaufeln (18') versehen ist, die derart ausgebildet sind, dass sie ein permanentes Mischen der beförderten Produkte während ihrer Behandlung sicherstellen.

7. Vorrichtung nach einem der Ansprüche 2 bis 6, **dadurch gekennzeichnet, dass** die geschlossene Kammer (13) mit mindestens einem Verteiler (30) zum Einspritzen von überhitztem Nassdampf ausgerüstet ist, wobei der genannte Verteiler längs der Kammer (13) in deren oberem Teil ausgebildet und außerhalb der genannten Kammer direkt mit dem Element (62) zum Erwärmen von gasförmigen Fluiden verbunden ist.

8. Vorrichtung nach Anspruch 7, **dadurch gekennzeichnet, dass** der Verteiler (30) mit in Reihe angeordneten Düsen (31) ausgestattet ist, die gegebenenfalls für eine optimale Homogenität der Dampftemperatur einzeln gesteuert werden.

9. Vorrichtung nach Anspruch 7 oder Anspruch 8, **dadurch gekennzeichnet, dass** die geschlossene Kammer (13) mit einem Spülkreislauf (36) zur Extraktion von überschüssigem Dampf ausgerüstet ist, wobei der Kreislauf an ein Behandlungselement vom Typ Zyklon oder Staubfilter angeschlossen werden kann.

10. Vorrichtung nach Anspruch 7 oder Anspruch 8, **dadurch gekennzeichnet, dass** das Element (62) zum Erwärmen von gasförmigen Fluiden vom Typ elektrischer Heizwiderstand ist, dessen Versorgung in Abhängigkeit von der gewünschten Temperatur des Fluids, das dieses Element durchströmt, reguliert wird.

11. Vorrichtung nach einem der Ansprüche 2 bis 10, **dadurch gekennzeichnet, dass** die Temperaturen (Tᵥ) des zuvor überhitzten Nassdampfes bei Atmosphärendruck und (Tₛ) des Schneckenabschnittes (18) der wärmeabgebenden Förderschnecke (17), die über die gesamte Dauer des Entkeimungsprozesses im Wesentlichen gleich gehalten werden, in einem Bereich zwischen 100°C und 250°C liegen.

12. Vorrichtung nach den Ansprüchen 5 und 11, **dadurch gekennzeichnet, dass** die Verweilzeit, die durch die Steuerung des Frequenzreglers (22') des Motors (22) zum Drehantrieb der wärmeabgebenden Förderschnecke (17) eingestellt wird, in einem Bereich zwischen einigen Sekunden und einigen Minuten liegt.
